# DEMANDE DE BREVET EUROPEEN

(11) **EP 1 168 579 A1**
(43) Date de publication de la demande: **02.01.2002**
(21) Numéro de dépôt: 00810555.3
(22) Date de dépôt: 23.06.2000
(51) Int. Cl.: H02K 5/22

(54) **Ensemble d'un moteur électrique et d'au moins un connecteur**

(71) Demandeur: SAIA-Burgess Electronics AG, CH-3280 Murten (CH)
(72) Inventeur: Bourqui, Yvan, 1720 Corminboeuf (CH)
(74) Mandataire: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Abrégé**

Le moteur électrique (1) fait partie d'un ensemble comportant deux connecteurs (5, 6) posé sur le moteur. Les connecteurs (5, 6) sont muni de conducteurs (8, 9) surmoulés ou sertis et des broches (10, 11, 12) pour établir le contact électrique entre le moteur, un câble de commande et d'alimentation et un circuit électronique associé au moteur. Le montage de l'ensemble est réalisé par simple pose des connecteurs (5, 6) sur le moteur (1).

## Description

Les systèmes connus de connexion pour moteurs électriques sont compliqués et difficiles à automatiser. Ils nécessitent souvent des soudures et/ou le montage de petits éléments ce qui complique le montage. Il est un but de la présente invention de simplifier le montage de moteurs électriques et ainsi de faciliter l'automatisation du montage.

Actuellement les moteurs électriques, en particulier les petits moteurs d'une puissance jusqu'à 2 W, sont souvent équipés ou associés à des accessoires tels que des circuits de commande électronique ou des détecteurs de position pour les moteurs asynchrones ou moteurs à courant continu. Il est un autre but de la présente invention de faciliter non seulement le montage mais aussi l'équipement individuel d'un moteur électrique avec un ou plusieurs accessoires.

Ces buts sont atteints selon la revendication 1. La connexion électrique et mécanique du moteur est ainsi réalisé d'une manière très simple et facile à automatiser. Le ou les connecteurs peuvent être équipé(s) de n'importe quels accessoires adaptés aux besoins au fonctionnement du moteur: Il est ainsi possible d'utiliser le même moteur standard et bon marché et de l'adapter d'une manière simple et efficace pour des besoins différents par simple pose d'au moins un connecteur intermédiaire équipé du ou des accessoire(s) voulu(s).

L'invention permet aussi de simplifier non seulement le montage mais plus particulièrement le branchement électrique d'un moteur, en particulier d'un moteur pas-à-pas, en évitant des adaptateurs entre le ou les enroulement(s) du moteur et le connecteur pour le câble de commande et d'alimentation.

L'invention sera expliquée plus en détail ci-après à l'aide de trois exemples d'exécution représentés dans les dessins annexés. Dans ceux-ci:
- La figure 1: est une vue perspective d'une paire de connecteurs susceptibles d'être assemblés avec un moteur indiqué en traits mixtes,
- la figure 2: représente le moteur assemblé avec lesdits connecteurs,
- la figure 3: représente l'ensemble de la figure 2 monté dans une partie d'un bâti avec un jeu d'engrenages réducteur,
- la figure 4: représente l'ensemble complet avec le bâti fermé,
- la figure 5: est une vue perspective du deuxième exemple d'exécution, et
- la figure 6: montre une coupe axiale du troisième exemple d'exécution.

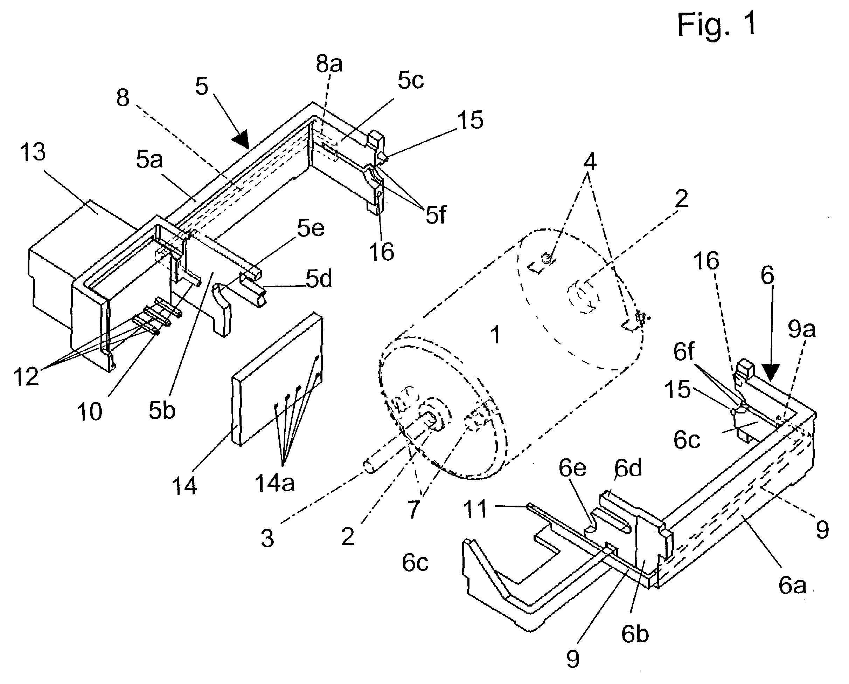

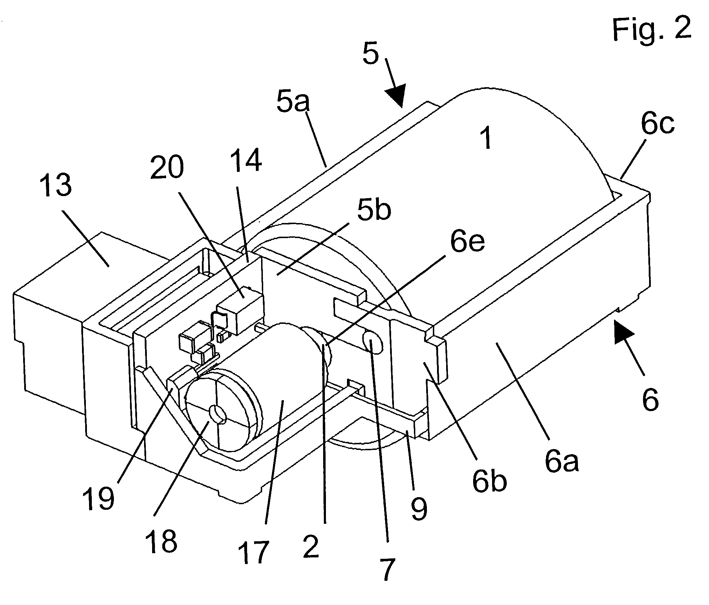

La figure 1 montre les constituants de l'ensemble, à savoir un moteur à courant continu 1 indiqué en traits mixtes. Le carter cylindrique du moteur présente des paliers cylindriques 2 dans les faces opposées. L'arbre 3 du moteur est représenté dans son état primitif, sans pignon, vis sans fin ou autre élément de transmission. Sur sa face opposée à l'arbre 3 le moteur présente deux bornes 4 entre lesquelles est branchée la partie active du moteur. L'ensemble comporte deux connecteurs 5 et 6 en matière plastique ou autre matière isolante appropriée, en forme générale de C ou de U, avec une branche longitudinal 5a respectivement 6a, des bras avant 5b respectivement 6b du côté arbre et 5c respectivement 6c du côté bornes du moteur. Les bras 5b et 6b présentent une denture 5d respectivement 6d susceptible de s'engager (fig. 2) lors de l'assemblage des deux connecteurs, pour fixer la position relative de ceux-ci et pour fixer en rotation le moteur par l'engagement de deux tenons 7 du moteur 1 dans des fentes des dentures. Les bras 5b, 6b et 5c, 6c présentent des surfaces de guidage cylindriques 5e, 5f respectivement 6e, 6f qui renferment les paliers 2 du moteur (fig. 2) pour fixer la position relative entre le moteur et les connecteurs. Les deux connecteurs comportent un système de conducteurs, en partie surmoulés ou sertis dans les branches et les bras des connecteurs et en partie nus pour établir les connections voulues avec le moteur et entre les deux connecteurs. Il s'agit d'un conducteur 8 surmoulé dans le connecteur 5 et d'un conducteur 9 surmoulé dans le connecteur 6, qui se terminent dans les bras 5c respectivement 6c dans des fourches 8a respectivement 9a susceptibles d'établir le contact avec les bornes 4 lors de l'assemblage décrit ci-après des connecteurs. Le conducteur 8 est relié à une broche 10. Le conducteur 9 se termine du côté arbre du moteur dans une broche 11. Le connecteur 5 comporte des broches 12 surmoulé qui sont accessibles à l'intérieur (visible sur la fig. 1) et dans un col de connecteur 13 où un câble de commande et d'alimentation peut être branché. L'ensemble comporte un circuit imprimé 14 schématiquement indiqué sur la figure 1, qui est muni de douilles 14a permettant le passage des broches 11 et 12 pour ainsi établir la liaison électrique entre les broches 12 et les broches 10 et 11 respectivement la liaison électrique entre le moteur et ledit câble de commande et d'alimentation.

L'assemblage des éléments illustrés est très simple. Le circuit imprimé 14 est glissé sur les broches 10 et 12 et puis les connecteurs 5 et 6 sont posés autour du moteur 1 dans leur position montée selon la figure 2. La position relative est définie par des goupilles 15 et des trous 16 des bras 5c et 6c, l'engagement des dentures 5d et 6d, l'engagement des tenons 7 dans des fentes des dentures 5d, 6d, par l'engagement des paliers 2 dans les surfaces 5e, 6e et par l'engagement des fourches 8a et 9a avec les bornes 4 du moteur.

Tandis que la figure 1 représente en détail la construction des connecteurs 5 et 6, la figure 2 montre en plus un équipement particulier pour un moteur à courant continu. L'arbre du moteur est muni d'une vis sans fin 17 et d'un aimant circulaire quadripolaire 18 qui coopère avec une sonde à effet de Hall 19 monté sur le circuit imprimé 14. Ce circuit est aussi muni d'un circuit électronique intégré 20 qui sert d'une part à déterminer la position angulaire de l'arbre du moteur et d'autre part à la commande locale du moteur. L'aimant circulaire 18 peut présenter n'importe quel nombre de pôles.

Ci-après on résumera les caractéristiques et avantages de la forme d'exécution de l'invention décrit ci-devant:

### Connecteur 5:

1. Connexion électrique d'une borne du moteur à courant continu avec le circuit électronique intégré ainsi que la connexion électrique du circuit électronique intégré avec les trois broches du connecteur.
2. Guidage du moteur par sa partie cylindrique (palier) arrière située entre ses deux bornes électriques.
3. Guidage du moteur par sa partie cylindrique avant située autour de l'arbre.
4. Guidage et fixation du circuit imprimé.
5. Connecteur femelle à trois broches.
6. Fixation en rotation du moteur.

### Connecteur 6:

1. Connexion électrique d'une borne du moteur à courant continu avec le circuit électronique intégré.
2. Guidage du moteur par sa partie cylindrique arrière située entre ses deux bornes électriques.
3. Guidage du moteur par sa partie cylindrique avant située autour de l'arbre.
4. Guidage et fixation du circuit imprimé.
5. Fixation en rotation du moteur.

### Avantages:

Montage rationnel des composants constituant le système. Le nombre d'opérations de montage est très réduit: en trois opérations de montage on obtient un système complètement assemblé et électriquement connecté.

Design rationnel permettant de réduire au maximum le nombre de pièces intervenant dans les opérations de montage. Le connecteur 5 remplace et assure les fonctions des éléments discrets suivants:
1. Un support fixant et guidant le moteur,
2. Un support fixant et guidant le circuit imprimé,
3. Un fil électrique ou un conducteur assurant la connexion d'une borne du moteur et du connecteur,
4. Un fil électrique ou un conducteur assurant la connexion du circuit électronique intégré et du connecteur,
5. Un connecteur.
   Le connecteur 6 remplace et assure les fonctions des éléments discrets suivants:
6. Un support fixant et guidant le moteur,
7. Un support fixant et guidant le circuit imprimé,
8. Un fil électrique ou un conducteur assurant la connexion d'une borne du moteur et du connecteur,

L'assemblage obtenu constitue un sous-ensemble pouvant être intégré très avantageusement dans la construction de moto-réducteurs ou d'autres types d'appareil nécessitant un moteur à courant continu, une mesure de la rotation du moteur et un connecteur.

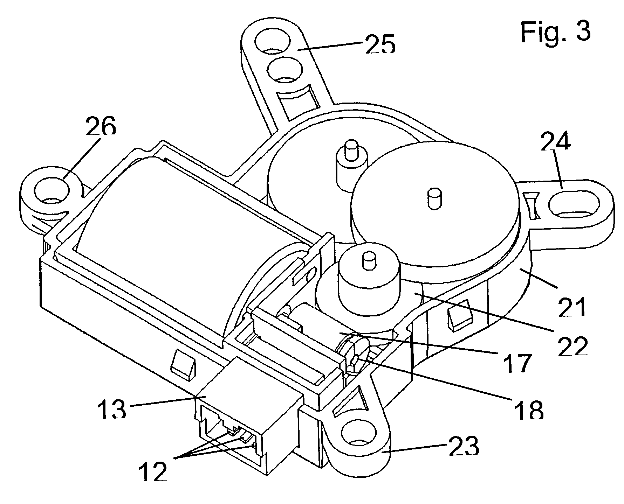

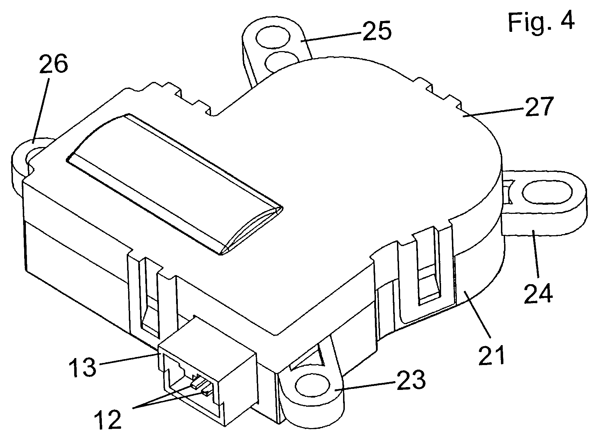

L'ensemble selon la figure 2 présente ainsi un produit en soi terminé, mais il peut être intégré par exemple dans une boite de vitesse. Selon la figure 3, l'ensemble est placé dans une partie inférieure 21 d'une boîte de vitesse. La vis sans fin 17 est en prise avec une première roue 22 d'un jeu d'engrenages réducteur non décrit en détail. La partie 21 est munie de plusieurs éléments de montage 23 à 26. La figure 4 montre l'ensemble complet avec la boîte de vitesse fermée par un couvercle 27.

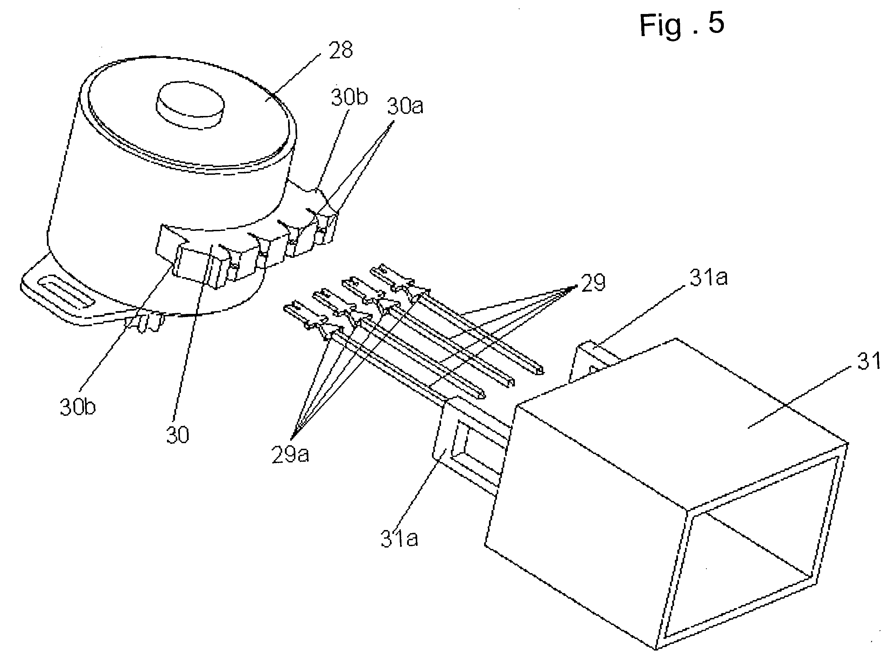

La figure 5 représente une forme d'exécution particulièrement favorable pour un moteur pas-à-pas 28. Les broches du connecteur 29 sont en même temps les broches du corps de bobine du moteur. Les fils du bobinage se terminent dans des encoches 30a d'une partie extérieure 30 du ou des corps de bobine, et ils sont reliés sans soudure avec les broches 29 par introduction des fourches formées à l'extrémité intérieure des broches dans les encoches 30a. L'introduction des fourches dans les encoches peut être effectuée par enfilement d'un col de connecteur 31 sur les broches et par pression du col sur des épaulements 29a des broches 29. Le col de connecteur est fixé au moteur par encliquetage de ses étriers 31a derrière des épaulements 30b du corps 30.

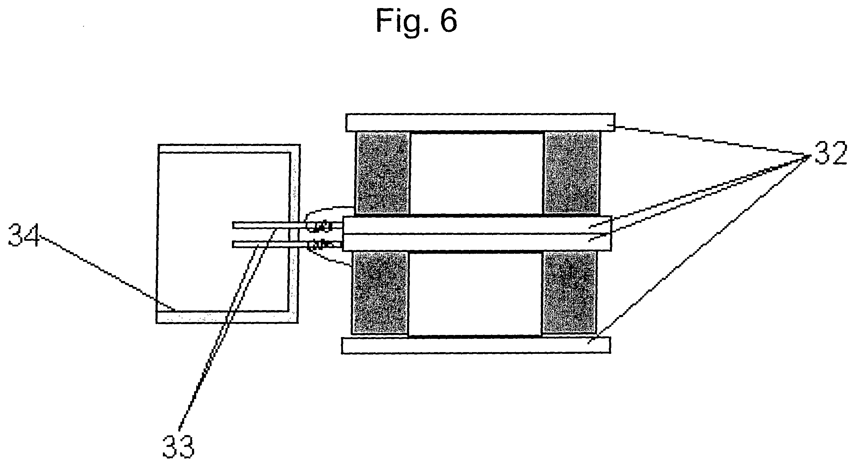

La figure 6 montre une forme d'exécution dans laquelle des broches 33 de contact sont fixées dans le ou les corps de bobine 32, et les fils des bobines sont soudés à ces broches. Un col de connecteur 34 est glissé sur les broches 33 et fixé à cran sur celles-ci ou sur d'autres éléments de fixation du moteur comparable à ceux illustré sur la figure 5. De nouveau, les broches servent les deux buts, à savoir d'établir un contact avec l'enroulement du moteur et avec un câble de commande et d'alimentation. Le travail de montage se limite à l'enfilement du col de connecteur 34.

Il va de soi que l'invention est applicable à n'importe quel type de moteur électrique, tel qu'un moteur asynchrone qui présente plus que deux bornes. L'ensemble selon la figure 2 peut être utilisé sans bâti ou boîte selon les figures 3 et 4 si les connecteurs 5 et 6 sont pourvus de moyens de fixation et sont réunis plus rigidement, par exemple par encliquetage.

## Revendications

1. Ensemble d'un moteur électrique et d'au moins un connecteur, **caractérisé en ce que** le moteur (1) comporte des bornes électriques (4) susceptibles de venir en contact avec des bornes électriques (8a, 9a) d'un connecteur intermédiaire (5,6) par simple pose du connecteur intermédiaire sur le moteur, le connecteur intermédiaire (5) comportant en plus au moins un accessoire (12, 13) supplémentaire.

2. Ensemble selon la revendication 1, **caractérisé en ce que** ledit accessoire est un connecteur (13) pour un câble de commande et d'alimentation du moteur.

3. Ensemble selon la revendication 1 ou 2, **caractérisé en ce que** ledit accessoire est un circuit électronique (20).

4. Ensemble selon l'une des revendications 1 à 3, **caractérisé en ce que** ledit accessoire est un détecteur de position (19) de l'arbre (3) du moteur.

5. Ensemble selon l'une des revendications 3 ou 4, **caractérisé en ce que** le circuit électronique (20) et ou le détecteur de position (19) sont des éléments détachés susceptibles d'être branchés à volonté au connecteur intermédiaire.

6. Ensemble selon la revendication 5, **caractérisé par** un circuit imprimé (14) muni dudit circuit électronique (20) et dudit détecteur de position (19), ledit circuit imprimé étant susceptible d'être glissé sur des broches (12) dudit connecteur (5).

7. Ensemble selon l'une des revendications 1 à 6, **caractérisé par** une paire de connecteurs intermédiaires (5, 6) susceptibles d'être assemblés en les posant sur le moteur.

8. Ensemble selon la revendication 7, **caractérisé en ce que** l'un des connecteurs intermédiaires (5) est muni d'au moins un élément accessoire(12, 13), et que les deux connecteurs(5, 6) intermédiaires comportent des conducteurs (8, 9) reliant lesdites bornes électriques (4) du moteur (1) avec au moins l'un (12) desdits éléments accessoires.

9. Ensemble selon l'une des revendications 1 à 8, **caractérisé par** un bâti (21, 27) renfermant le moteur (1) et ledit ou lesdits connecteurs (5, 6) intermédiaire(s) et comportant des éléments de montage (23-26).

10. Ensemble selon la revendication 9, **caractérisé en ce que** ledit bâti (21, 27) comprend un jeu d'engrenages (22).

11. Ensemble selon l'une des revendications 1 à 10, **caractérisé en ce que** le moteur (1) et le ou les connecteurs (5, 6) intermédiaire(s) présentent des éléments de positionnement mutuel (5d, 6d; 15, 16).

12. Ensemble selon l'une des revendications 1 à 7 ou 10 ou 11, **caractérisé en ce que** ledit ou lesdits connecteurs(s) intermédiaire(s) est/sont à la fois bâti du moteur.

13. Ensemble, de préférence selon l'une des revendications 1 à 11, **caractérisé en ce que** le moteur 28, 32), de préférence un moteur pas à pas, est muni de plusieurs bornes (29, 33) servant également comme contacts d'un connecteur pour un câble de commande et d'alimentation du moteur.

14. Ensemble selon la revendication 13, **caractérisé par** un col de connecteur (31, 34) susceptible d'être posé sur lesdites bornes (29, 33).
